# EUROPEAN PATENT SPECIFICATION

(11) **EP 2 233 358 B1**
(45) Date of publication and mention of the grant of the patent: **24.04.2013**
(21) Application number: 10003065.9
(22) Date of filing: 23.03.2010
(51) Int. Cl.: B60R 1/00, G06T 7/00

(54) **Obstruction detecting apparatus**
Blockierungserkennungsvorrichtung
Appareil de détection des obstructions

(30) Priority: 24.03.2009 JP 2009071790
(43) Date of publication of application: 29.09.2010
(73) Proprietor: Aisin Seiki Kabushiki Kaisha, Kariya-shi, Aichi 448-8650 (JP)
(72) Inventor: Kakinami, Toshiaki, Kariya-shi, Aichi-ken 448-8650 (JP)
(74) Representative: Kramer - Barske - Schmidtchen

(56) References cited:
- EP-A1- 1 115 250
- JP-A- 2008 085 710
- US-A1- 2004 105 579
- US-A1- 2005 237 385

## Description

### TECHNICAL FIELD

This disclosure relates to an obstruction detecting apparatus. More specifically, this disclosure relates to an obstruction detecting apparatus, in which a captured image of a surrounding of a vehicle, captured by a vehicle-mounted camera, is projection-transformed into an image, viewed downwardly from an above viewpoint.

### BACKGROUND DISCUSSION

A known obstruction detecting apparatus is disclosed in JP2001-114047A. According to JP2001-114047A, captured images of a surrounding of a vehicle, captured from different positions, are projection-transformed on a plane, provided at the same level (position) as a road surface, thereby generating road surface transformed images. Further, areas of objects other than road surface are extracted, the road surface transformed images are superimposed, and difference is calculated, thereby extracting areas other than the road surface. According to JP2001-114047A, an outline of the area of the object other than the road surface is determined to be either an outline corresponding to the object or an outline generated due to a distortion of the projective transformation. Then, the outline of the object is superimposed on an image, generated on the basis of the road surface transformed image, thereby displaying a surrounding of the vehicle so as to be easily recognized by a user.

Generally, with regard to a three-dimensional object, such as a vehicle or a human body, having a height component, the higher the three-dimensional object is, the greater a distortion of a transformed image of the three-dimensional object is. Therefore, it may be difficult to specify the transformed image of the three-dimensional object in a bird's eye view image. However, according to JP2001-114047A, an outline of the area of the object other than the road surface is determined to be either an outline corresponding to the object or an outline generated due to distortion of the projective transformation. Therefore, the three-dimensional object may be clearly displayed.

A manner of displaying the captured image, captured by the vehicle-mounted camera, on a monitor is disclosed in JP2001-114047A. According to JP2001-114047A, the captured image, captured by the vehicle-mounted camera, is projection-transformed on the plane, provided so as to be the same level as the road surface, thereby generating the transformed image. Then, the transformed image is displayed on the monitor. Such transformed image may also be referred to as a bird's eye view image, or a top view image. A bird's eye view image and a top view are viewed downwardly from an above viewpoint, set at a point substantially vertically higher than the vehicle. Therefore, a user may easily recognize the surrounding of the vehicle.

When the captured image, captured by the vehicle-mounted camera, is transformed into the bird's eye view image, the three-dimensional object, having a height, and a mark of the road and the like, not having a height, are displayed in the same manner. Therefore, it may be difficult to recognize the three-dimensional object in the bird's eye view image. However, according to JP2001-114047A, the three-dimensional object area is extracted in order to be emphatically displayed so that a location of the three-dimensional object may be recognized.

Compared to a configuration where a plurality of vehicle-mounted cameras is used to generate the bird's eye view, a cost is reduced in a configuration where a single vehicle-mounted camera is used to generate the bird's eye view. In a case where only one camera is provided, a plurality of images are captured by the single vehicle-mounted camera at different positions as the vehicle is moved, the transformed images (the bird's eye view images) are generated on the basis of two captured images, and a parallax between two of the transformed images is calculated as the three-dimensional object, and thereby extracting the three-dimensional object area.

More specifically, the transformed images are generated on the basis of the two captured images (a previously captured image and a subsequently captured image). The previously captured image and the subsequently captured image are projection-transformed on the road surface so as to generate the transformed images. Then, a transformed image of an image, which is supposed to be captured at a position where the subsequently captured image is captured, is estimated on the basis of the transformed image of the previously captured image. Subsequently, the parallax between the estimated transformed image and the transformed image of the actually subsequently captured image is calculated. Accordingly, the parallax between the captured images, captured at two different capturing positions, is calculated so as to extract the area of the three-dimensional object.

A configuration where only a single camera is mounted requires less cost than a configuration where a plurality of cameras is mounted. However, the area of the three-dimensional object is extracted after the vehicle is moved. Therefore a time lag is generated.

US 2004/0105579 A1 (closest prior art) relates to a driving support apparatus for supporting driving a vehicle by picking up the situation around the vehicle by using a plurality of image pickup means attached to the vehicle, wherein a three-dimensional object is detected based on the parallax between the images picked up by the plurality of image pickup means.

US 2005/0237385 A1 relates to a stereo camera supporting apparatus for supporting a stereo camera constituted in such a manner as to obtain a plurality of images having parallax errors by a plurality of visual point detached from one another.

EP 1 115 250 A1 relates to an apparatus and a method for displaying a synthesized single image composed of a plurality of images shot by plural cameras.

JP 2008085710 A relates to a driving support system for eliminating conventional defects so as to achieve highly reliable obstacle detection by using two image pickup devices which are provided with a space in the vehicle so that imaging areas mutually include a common region.

A need thus exists for an obstruction detecting apparatus, which extracts a three-dimensional object area, using of a single camera without generating a time lag.

### SUMMARY

According to an aspect of this disclosure, an obstruction detecting apparatus includes a camera capturing a surrounding of a vehicle, a projective transformation means projection-transforming one frame of captured images, captured by means of the camera, respectively on at least two imaginary planes, so as to generate transformed images, viewed downwardly from an above viewpoint, the imaginary planes having a first imaginary plane being set at the same level as a road surface and/or at least one second imaginary plane being set at a different level from the road surface to be in parallel with the road surface, and a three-dimensional object area extracting means extracting image areas from the transformed images, which are generated by means of the projective transformation means, and extracting an area, at which the image areas overlap when the transformed images are superimposed, and which extends along a radially outward direction from an optical center, as a three-dimensional object area, at which an image of a three-dimensional object exists.

Accordingly, when the three-dimensional object image, included in the captured image, is projection-transformed on the imaginary planes, being set at different levels, the lower end of the three-dimensional object image is located at different positions. Further, when the three-dimensional object image is projection-transformed, the three-dimensional object image extends along the radially outward direction from the optical center. According to such property, areas where the three-dimensional object image exists (the outlines of the three-dimensional object image), may be extracted from the transformed images, generated from one frame of the captured images, and an area, at which the areas where the three-dimensional object image exists overlap when the transformed images are superimposed, and which extends along the radially outer direction from the optical center C, may be extracted as the three-dimensional object area, where the image of the three-dimensional object exist. Accordingly, the three-dimensional object area may be extracted, using a single camera without generating a time lag.

According to another aspect of this disclosure, the obstruction detecting apparatus further includes a three-dimensional object area specifying means generating specifying information for specifying a location of the three-dimensional object area, extracted by the three-dimensional object area extracting means, and generating information of a location, at which the specifying information is displayed on the transformed image, which is generated by the projective transformation means on the basis of the captured image, or on the captured image, captured by means of the camera.

Accordingly, the specifying information is displayed at a location for specifying the three-dimensional object image included either in the transformed image, generated by the projective transformation means or in the captured image, captured by the camera. Consequently, the user may recognize the location of the three-dimensional object from an image displayed on the monitor.

According to the embodiment, the three-dimensional object area extracting means executes t an image area extracting process for extracting the image areas from the transformed images using an outline extracting filter, a three-dimensional object candidate area extracting process for calculating a sum of the image areas when the transformed images are superimposed, thereby extracting an area, at which the image areas overlap, as the a three-dimensional object candidate area, and a three-dimensional object image extracting process for extracting an area, which extends along the radially outward direction from the optical center, from the three-dimensional object candidate area as a three-dimensional object area.

Accordingly, the image areas, defined by the outlines extracted from the transformed images, are extracted in the image area extracting process. Then, the area, at which the image areas overlap when the transformed images are superimposed, is extracted as the three-dimensional object candidate area in the three-dimensional object candidate area extracting process. Then, the area, which extends along the radially outward direction from the optical center, is extracted from the three-dimensional object candidate area, as the three-dimensional object area in the three-dimensional object are extracting process.

According to the embodiment, the projective transformation means is configured by a first projective transformation means projection-transforming one frame of the captured images on a first imaginary plane, being set at the same level as the road surface or being set to be in parallel with the road surface, and by the a second projective transformation means projection-transforming one frame of the captured image on the a second imaginary plane, being set to be in parallel with the first imaginary plane at a higher level than the first imaginary plane. The three-dimensional object area extracting means extracting the image areas from the transformed images, generated by means of the first projective transformation means and the second projective transformation means, and extracting an area, at which the image areas overlap when the transformed images are superimposed, and which extends along a radially outward direction from the optical center, as the three-dimensional object area.

Accordingly, the first projective transformation means and the second projective transformation means for configuring the projective transformation means generate the transformed images respectively on the imaginary planes, which are set at different levels, and the three-dimensional object area extracting means extracts the three-dimensional area from the first and second transformed images. In other words, the three-dimensional object area may be extracted using the minimum number of the imaginary planes.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram illustrating a vicinity of a driver's seat of a vehicle;

Fig. 2 is a planar view schematically illustrating a configuration of the vehicle;

Fig. 3 is an explanation diagram of a transformation of a viewpoint;

Fig. 4 is a diagram illustrating an image captured by a camera;

Fig. 5 is a diagram illustrating a transformed image viewed vertically downwardly from an above viewpoint;

Fig. 6 is a block circuit diagram illustrating a configuration of a control;

Fig. 7 is a flow chart schematically illustrating the control;

Fig. 8 is a perspective view illustrating a relationship among a three-dimensional object, an optical center and first and second imaginary planes;

Fig. 9 is a side view illustrating the relationship among the three-dimensional object, the optical center and the first and second imaginary planes;

Fig. 10 is a side view illustrating a relationship among the three-dimensional object, the optical center and a plurality of imaginary planes;

Fig. 11A is a diagram illustrating a first transformed image, which is generated on the first imaginary plane;

Fig. 11B is a diagram illustrating a second transformed image, which is generated on the second imaginary plane;

Fig. 12A is a diagram illustrating the first transformed image, which is binarized;

Fig. 12B is a diagram illustrating the second transformed image, which is binarized;

Fig. 13 is a diagram illustrating an extracted image of the three-dimensional object; and

Fig. 14 is a diagram illustrating an image, which is displayed on a monitor after a three-dimensional object area specifying process is executed.

### DETAILED DESCRIPTION

An embodiment of an obstruction detecting apparatus will be described hereinafter with reference to the attached drawings.

### [Entire configuration]

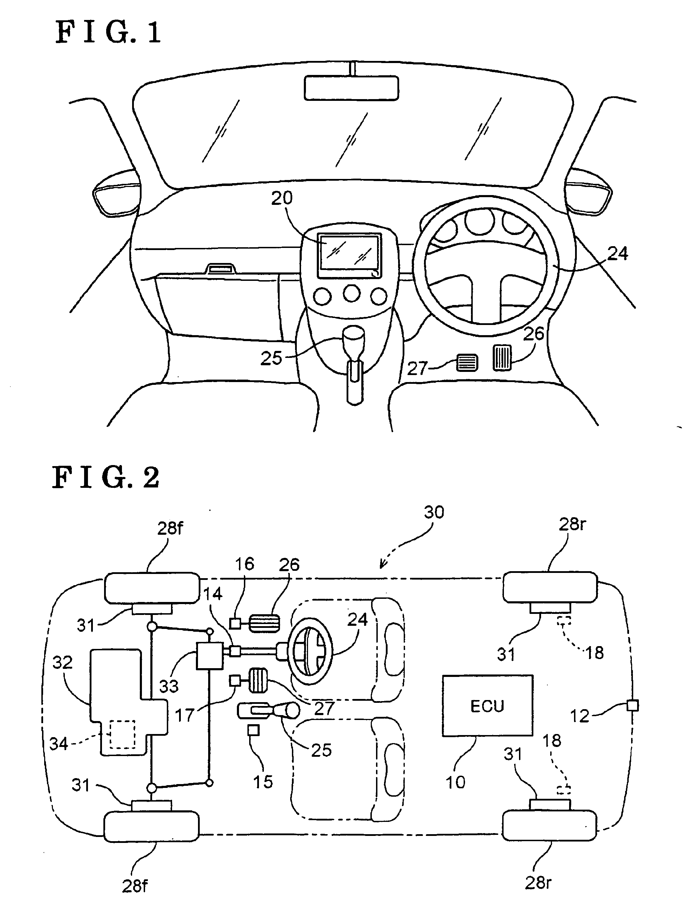

The obstruction detecting apparatus according to the embodiment may be applied to, for example, a parking assist apparatus, a drive assist apparatus or the like. A basic configuration of a vehicle 30, on which the obstruction detecting apparatus is mounted, is shown in Figs. 1 and 2. As illustrated in Figs. 1 and 2, a steering wheel 24, provided in the vicinity of a driver's seat, is interlocked with a power steering unit 33, and a steering force, applied to the steering wheel 24, is transmitted to front wheels 28f by means of the power steering unit 33 so as to steer the vehicle 30. The front wheels 28f serve as steering wheels according to the embodiment. An engine 32 and a transmission mechanism 34 are arranged at a front portion of the vehicle 30. The transmission mechanism 34 includes a torque converter, a CVT or the like for changing a rotational speed of a torque outputted from the engine 32 and then transmitting the torque to the front wheels 28f and/or rear wheels 28r. The torque is transmitted to the front wheels 28f and/or the rear wheels 28r, depending on a driving configuration of the vehicle 30 (a front-wheel drive, a rear-wheel drive and a four-wheel drive). An accelerator pedal 26 and a brake pedal 27 are arranged in the vicinity of the driver's seat so as to be aligned. The accelerator pedal 26, serving as an accelerator operating means, is operated so as to control a driving speed of the vehicle 30. The brake pedal 27 is operated so as to apply a braking force to the front and rear wheels 28f and 28r by means of brake devices 31, provided at the front and rear wheels 28f and 28r, respectively.

A monitor 20 (a display device) is arranged at an upper portion of a console in the vicinity of the driver's seat. The monitor 20 is a liquid crystal display having a backlight. A touch screen, such as a pressure-sensitive screen and an electrostatic touch screen, is provided at a display surface of the monitor 20. When a user touches the touch screen with his/her finger or the like so as to input a command, a touched position is inputted into the touch screen as a location data. The touch screen serves as a command inputting means, to which a command for starting a parking assist process, for example, is inputted. The monitor 20 includes a speaker for outputting instruction messages, sound effects and the like. In a case where a navigation system is mounted on the vehicle 30, a display device of the navigation system may also serve as the monitor 20. The monitor 20 may alternatively be a plasma display, a CRT or the like. The speaker may be arranged at other areas, such as an inner surface of a door and the like.

A steering sensor 14 for measuring an operational direction and an operational amount of the steering wheel 24 is provided to an operation system of the steering wheel 24. A shift position sensor 15 for detecting a shift position is provided at an operation system of a shift lever 25. An accelerator sensor 16 for measuring an operation amount of the accelerator pedal 26 is provided to an operation system of the accelerator pedal 26. A brake sensor 17 for detecting whether or not the brake pedal 27 is operated is provided to an operation system of the brake pedal 27.

Further, rotation sensors 18, serving as moving distance sensors, for measuring a rotational amount of the front wheels 28f and/or the rear wheels 28f are provided to the front wheels 28f and/or the rear wheels 28r, respectively. According to the embodiment, the rotation sensors 18 are respectively provided to the rear wheels 28r. Alternatively, a moving distance of the vehicle 30 may be measured on the basis of a rotational amount of a driving system of the transmission mechanism 34. Furthermore, an electronic control unit (which will be referred to as an ECU) 10, is provided to the vehicle 30. The ECU 10 serves as an obstruction detecting apparatus.

A camera 12 for capturing an image of a scene behind of the vehicle 30 is arranged at a rear portion of the vehicle 30. The camera 12 is a digital camera, in which an imaging device, such as charge coupled device (CCD), a CMOS image sensor (CIS) and the like is accommodated, and which outputs information, captured by means of the imaging device, in the form of a real-time motion picture. The camera 12 includes a wide-angle lens whose viewing angle is approximately 140 degrees in a left-right direction of the vehicle. The camera 12 is arranged so as to capture an image of a scene behind the vehicle 30 in a substantially horizontal viewing direction. More specifically, the camera 12 is arranged so as to have a depression angle of approximately 30 degrees in a rear direction of the vehicle, and so as to capture an image of an area extending for approximately 8 meters behind the vehicle 30. The captured images are inputted into the ECU 10, serving as the obstruction detecting apparatus.

### [A configuration of a control of an ECU]

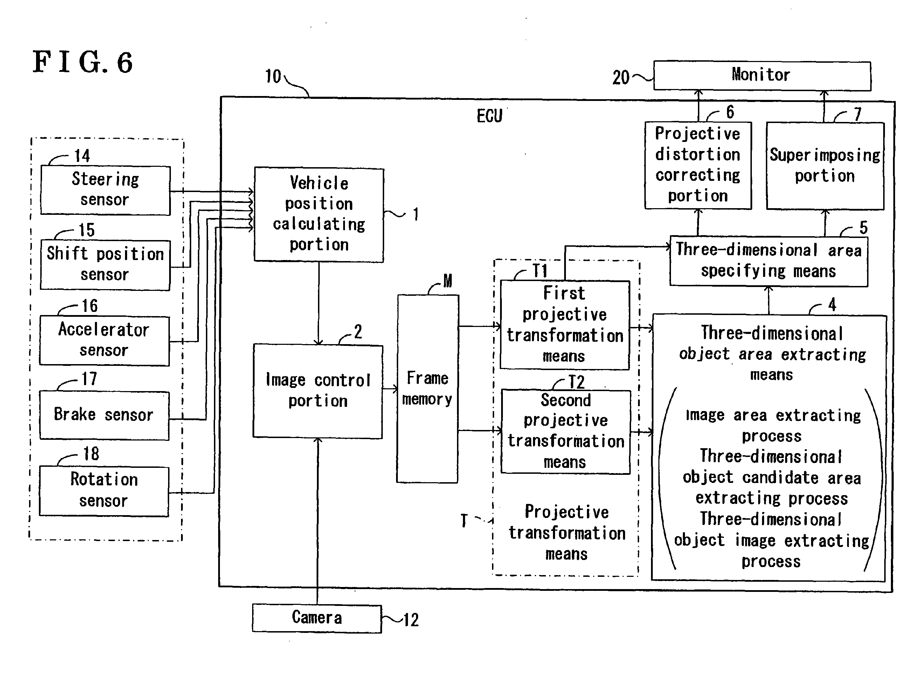

The ECU 10 includes a micro processing unit for executing programs so as to perform required processes. As illustrated in Fig. 6, the ECU 10 includes a vehicle position calculating portion 1, an image control portion 2, and a frame memory M. The vehicle position calculating portion 1 obtains signals sent from the steering sensor 14, the shift position sensor 15, the accelerator sensor 16, the brake sensor 17, the rotation sensor 18, and the like. The image control portion 2 controls the camera 12 on the basis of in formation outputted from the vehicle position calculating portion 1. The frame memory M memorizes captured images, which are captured by the camera 12 and transmitted through the image control portion 2. The ECU 10 further includes a projective transformation means T, which is configured by a first projective transformation means T1 and a second projective transformation means T2, a three-dimensional object area extracting means 4, a three-dimensional object area specifying means 5, a projective distortion correcting portion 6 and a superimposing portion 7. The projective transformation means T generates first and second transformed images, which are transformed so as to be viewed substantially vertically downwardly from an above viewpoint on the basis of one frame of the captured images obtained from the frame memory M. The three-dimensional object area extracting means 4 extracts an area of a three-dimensional object from the first and second transformed images generated by the first and second projective transformation means T1 and T2. The three-dimensional object area specifying means 5 specifies an area of the three-dimensional object on the basis of the information outputted from the three-dimensional object area extracting means 4. The projective distortion correcting portion 6 corrects a distortion of the image of the three-dimensional object, specified by means of the three-dimensional object area specifying means 5, and then outputs the corrected image to the monitor 20. The superimposing portion 7 outputs a specifying image corresponding to the three-dimensional object area, which is specified by means of the three-dimensional object area specifying means 5 to the monitor 20, so that the specifying image is superimposed on the transformed image.

Each of the vehicle position calculating portion 1, the image control portion 2, the projective transformation means T, the three-dimensional object area extracting means 4, the three-dimensional object area specifying means 5, the projective distortion correcting means 6 and the superimposing portion 7, which is configured by a program (a software) according to the embodiment, may also be configured by a hardware, or partially by a hardware so as to perform the process by means of a combination of the software and hardware.

The first and second projective transformation means T1 and T2, by which the projective transformation means T is configured, respectively generates the first transformed image, into which one frame of the captured images is projection-transformed so as to be viewed substantially vertically downwardly from an above viewpoint, on a first imaginary plane S1, which is set at the same level (a position) as a road surface, and the second transformed image, into which one frame of the captured images is projection-transformed so as to be viewed substantially vertically downwardly from an above viewpoint, on a second imaginary plane S2, which is set in parallel with the road surface at the higher level (a position) than the road surface. The projective transformation means T may also be configured so as to generate transformed images on three or more imaginary planes, respectively.

The projective transformation means T executes a process, which may be referred to as homography, so as to generate a bird's eye view image, such as a GPT (ground plane transformation) image, on each of imaginary planes (the plurality of imaginary planes will be hereinafter referred to as imaginary planes S). The projective transformation means T executes the process in a manner of obtaining one frame of the captured images, in which the road is captured by the camera 12 at a predetermined angle, projection-transforming one frame of the captured images on each of the imaginary planes S, using a transformation formula, which is created on the basis of a projective transformational relationship between an image plane of the captured image and each of the imaginary planes S, and executing a required calibration process. As disclosed in, for example, JP2006-148745A, a transformation relationship between the image plane and the road surface may be calculated, using homography, by way of a camera calibration in a factory and the like before the user uses the obstruction detecting apparatus.

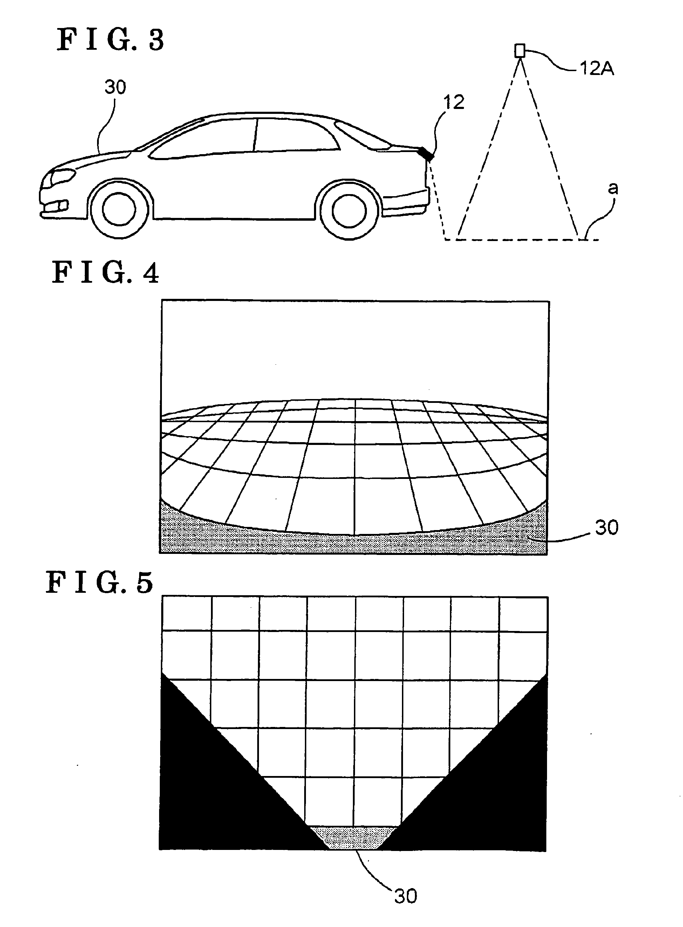

For example, a captured image of a capturing area "a" (see Fig. 3), captured by means of the camera 12, is illustrated in Fig. 4. On the other hand, a transformed image, to which the captured image is projection-transformed, resembles a bird's eye view image shown in Fig. 5, which is captured by an imaginary camera 12A for viewing the capturing area "a" substantially vertically downwardly. As illustrated in Fig. 5, a lower-left and a lower-right portion of the transformed image includes a blank portion, which does not include image data.

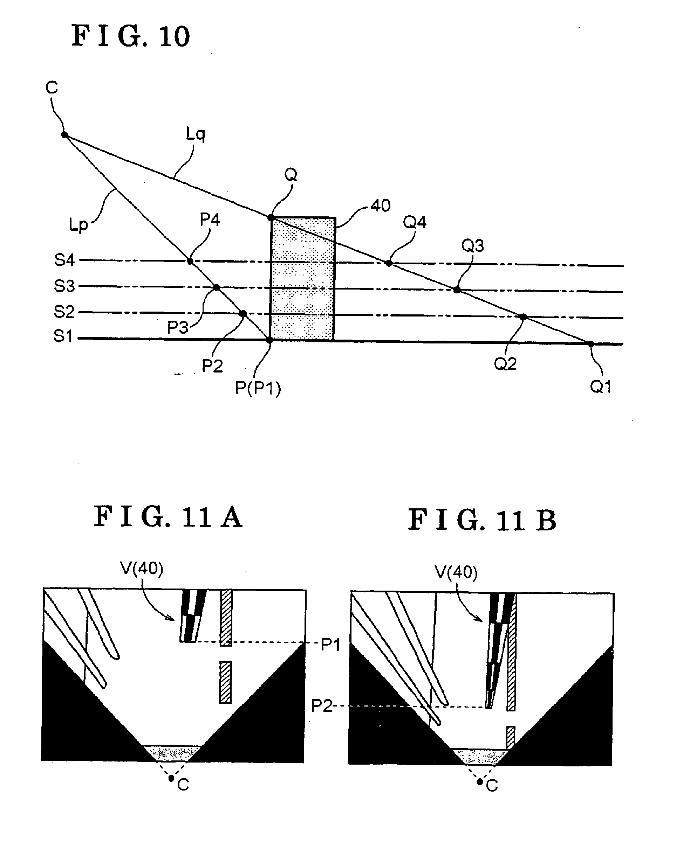

The first transformed image, which is generated on the first imaginary plane S1, is illustrated in Fig. 11A, as an example. The second transformed image, which is generated on the second imaginary plane S2 set at the higher level (the position) than the first imaginary plane S1, is illustrated in Fig. 11B, as an example. Further, an optical center C is illustrated in Figs. 11A and 11B.

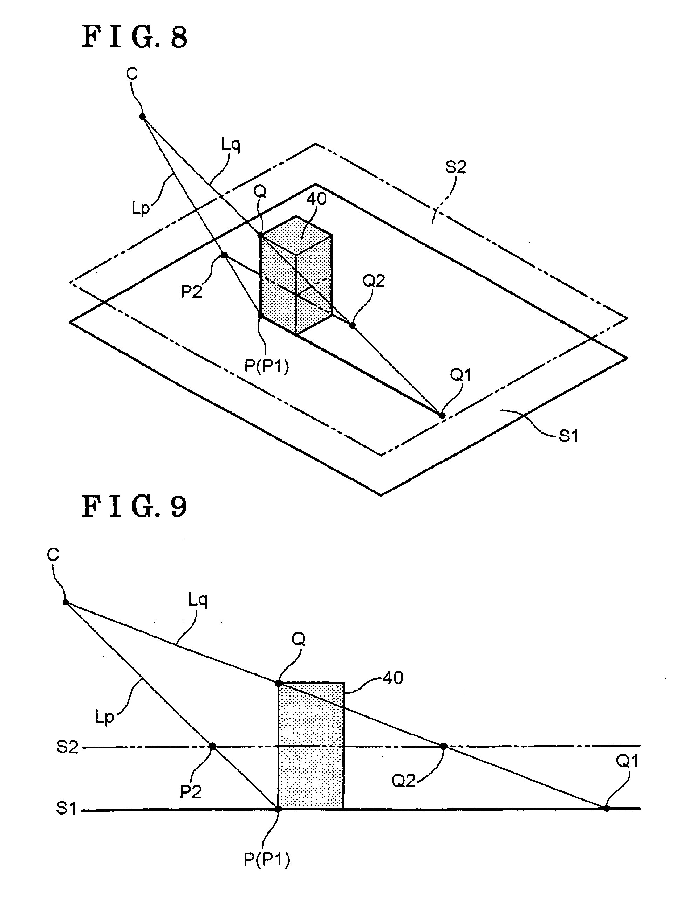

As illustrated in Figs. 8 and 9, when a captured image of a three-dimensional object 40, which is formed into a substantially rectangular parallelepiped and whose lower ends contact the road surface, is projection-transformed on the first imaginary plane S1, a line connecting a lower end position P and an upper end position Q (a vertical line in Fig. 8) corresponds a substantially straight line connecting a point P1 and a point Q1 in the first transformed image, generated on the first imaginary plane S1. Further, when the captured image of the three-dimensional object 40 is projection-transformed on the second imaginary plane S2, a line connecting the lower end position P and the upper end position Q corresponds to a substantially straight line connecting a point P2 and a point Q2 in the second transformed image, generated on the second imaginary plane S2.

A line connecting the lower end position P and the optical center C is set to be a lower imaginary line Lp. Likewise, a line connecting the upper end position Q and the optical center C is set to be an upper imaginary line Lq. Accordingly, a point, at which the lower imaginary line Lp crosses the second imaginary plane S2, is set to be the point P2 and a point, at which the upper imaginary line Lq crosses the second imaginary plane S2, is set to be the point Q2.

Alternatively, as illustrated in Fig. 10, in a case where the transformed images are respectively generated on four imaginary planes S (the first imaginary plane S 1, the second imaginary plane S2, a third imaginary plane S3 (a second imaginary plane), and a fourth imaginary plane (a second imaginary plane) S4) by means of the projective transformation means T, the lower end position P of the three-dimensional object 40 is set to be points P1, P2, P3 and P4 on the first to fourth imaginary planes S 1 to S4, respectively. The higher the imaginary plane S is, the closer the images corresponding to the lower end position P is to the optical center C. Likewise, as illustrated in Fig. 10, the upper end position P of the three-dimensional object 40 is set to be points Q1, Q2, Q3 and Q4 on the first to fourth imaginary planes S 1 to S4, respectively. The higher the imaginary plane S is, the closer the images corresponding to the upper end position Q is to the optical center C. However, the upper end position Q may not be necessarily included in the captured image, and therefore may not be processed.

In a case where the three-dimensional object 40 extends substantially vertically upwardly from the road surface, the three-dimensional object 40 extends toward the optical center C on the transformed image of the captured image of the three-dimensional object 40.

### [Processing manner of object detecting apparatus]

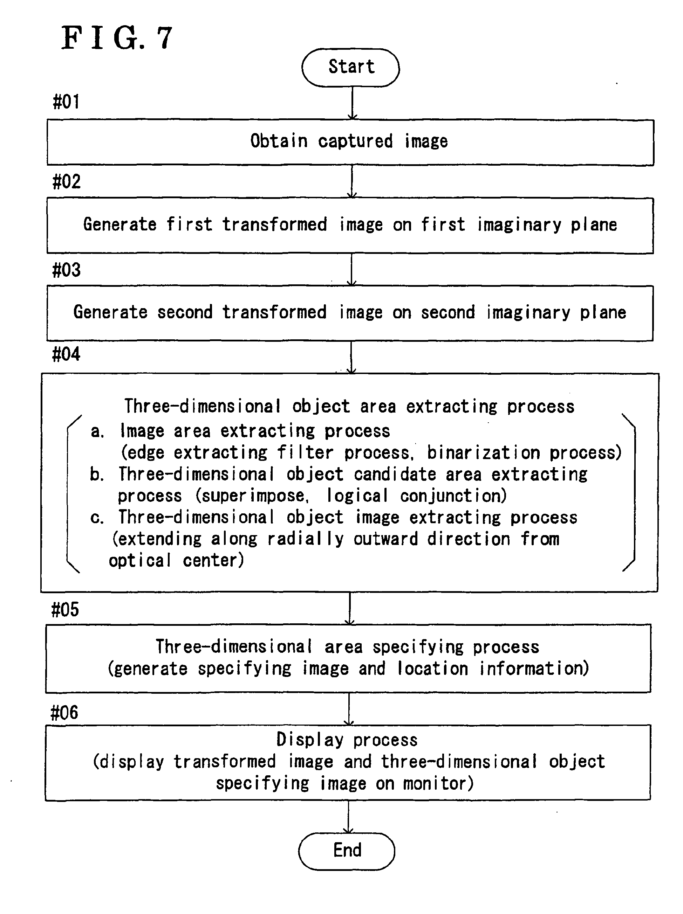

A processing manner of the object detecting apparatus will be described hereinafter with reference to a flowchart shown in Fig. 7, and an information flow in the control configuration of the ECU 10 shown in Fig. 6.

The image control portion 2 obtains one frame of the captured images from the camera 12 at a timing every time when the vehicle 30 moves rearward by a predetermined distance that is determined on the basis of information outputted from the vehicle position calculating portion 1, and then outputs the obtained image to the frame memory M so that the inputted image is memorized therein (Step #01).

The one frame of the captured image, memorized in the frame memory M, is provided to the first and second projective transformation means T1 and T2. Then, the first projective transformation means T1 projection-transforms the captured image into the first transformed image on the first imaginary plane S1 (Step #02) and the second projective transformation means T2 projection-transforms the captured image into the second transformed image on the second imaginary plane S2 (Step #03).

The first transformed image, generated by means of the first projective transformation means T1, is shown in Fig. 11A and the second transformed image, generated by means of the second projective transformation means T2, is shown in Fig. 11B. As illustrated in Figs. 11A and 11B, a column V (an example of the three-dimensional object 40) is placed at a substantially central position of each of the first and second transformed images, and a lower end position (which will be referred to as a lower end position P2 hereinafter) of the column V on the second transformed image, generated by means of the second projective transformation means T2 is set to be closer to the optical center C than a lower end position (which will be referred to as a lower end position P1 hereinafter) of the column V on the first transformed image, generated by means of the first projective transformation means T1. In other words, the lower end position P1 and the lower end position P2 are displaced relative to each other.

The three-dimensional object area extracting means 4 obtains the first and second transformed images, generated by means of the first and second projective transformation means T1 and T2, respectively, from the projective transformation means T, and then executes an image area extracting process, a three-dimensional object candidate area extracting process and a three-dimensional object image extracting process, in the mentioned order (Step #04).

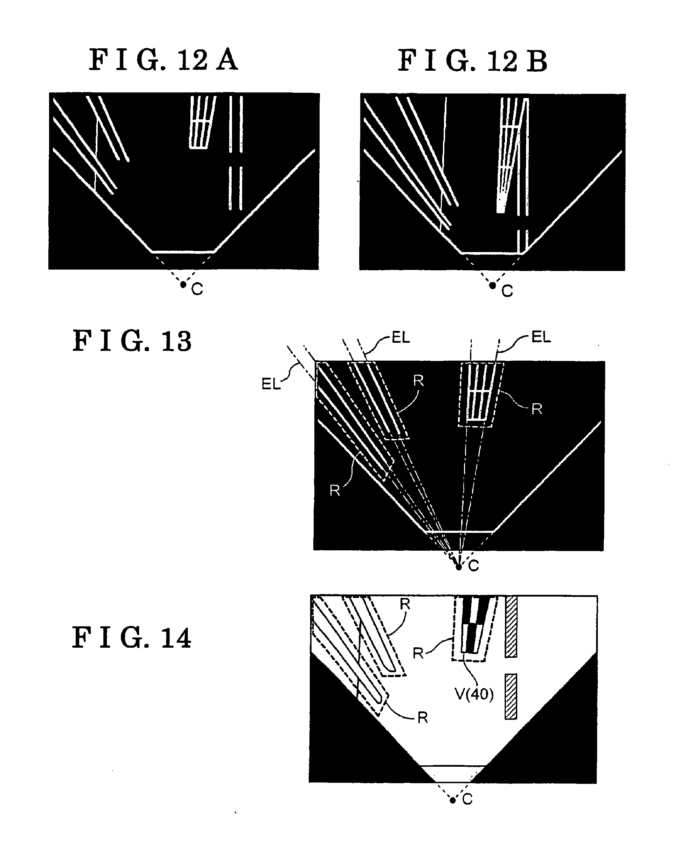

In the image area extracting process, a horizontal direction differential filter (an outline extracting filter) for emphasizing edges is applied to each of the first and second transformed images, and thereby extracting an outline. Then, a binarization process and a process for extracting a value higher than a predetermined threshold value are executed, and thereby extracting clear images, from which noise is removed. The first and second transformed images after the image area extracting process are shown in Figs. 12A and 12B.

In the three-dimensional object candidate area extracting process, the first and second transformed images after the image area extracting process, are superimposed, and a logical conjunction (AND) process is executed to the superimposed images so that overlapping image areas are extracted as three-dimensional object candidate areas. In the three-dimensional object candidate area extracting process, an arithmetic addition (ADD) process may be executed instead of the logical conjunction (AND) process.

In the three-dimensional object image extracting process, it is determined whether or not each of the three-dimensional object candidate areas extend along a radially outward direction from the optical center C. More specifically, as illustrated in Fig. 13, vertical edge lines EL are extracted from the three-dimensional object candidate areas, and then it is determined whether or not elongated lines of the vertical edge lines EL extend to the optical center C. Areas (shown by a reference numeral R in Fig. 3), defined by the vertical edge lines EL whose elongated lines extend to the optical center C, are extracted as three-dimensional object areas, within which the three-dimensional objects respectively exist. The three-dimensional object area corresponds to the outline of the three-dimensional object image.

In the three-dimensional object image extracting process, the elongated liens of the vertical edge lines EL may not necessarily cross the optical center C, and may extend to the vicinity of the optical center C. Alternatively, a plurality of imaginary lines extending in the radially outward direction from the optical center C may be set, and the three-dimensional object candidate areas whose vertical lines extend substantially in parallel with the imaginary lines may be extracted as the three-dimensional object areas.

Accordingly, even when a mark (for example, a series of a simple geometric mark) on a road surface is extracted as the three-dimensional object candidate area in the three-dimensional object candidate area extracting process, the mark of the road is not extracted as the three-dimensional object area because the geometric mark does not extend along the radially outward direction from the optical center C.

Information of locations of the three-dimensional object areas, which are extracted by means of the three-dimensional object area extracting means 4, and the first transformed image, which is generated by the first projective transformation means T1, are sent to the three-dimensional object area specifying means 5. Then, the three-dimensional object area specifying means 5 generates specifying images, serving as images for specifying the three-dimensional objects, such as frame (shown by the reference numeral R in Fig. 13) and mesh covering the three-dimensional object areas, so that the specifying images correspond to shapes and sizes of the three-dimensional areas. The three-dimensional object area specifying means 5 further generates information of locations, at which the specifying images are displayed (Step #05)

Subsequently, the projective distortion correcting portion 6 corrects a distortion of the first transformed image, transformed by the first projective transformation means T1, and then displays the corrected image on the monitor 20. Further, as illustrated in Fig. 14, the superimposing portion 7 outputs the specifying images to the monitor 20 on the basis of the information of the location of the specifying images so that the specifying images and the corrected image are superimposed (Step #06). The specifying images for specifying the three-dimensional object areas are shown as the frame R in Fig. 14. However, the three-dimensional object areas may not be necessarily specified by the frame images R, and may be specified by a different manner from Fig. 14. For example, a color of the three-dimensional object areas may be changed, or markings may be displayed in the vicinity of the three-dimensional object areas.

An upper portion of the column V in each of the first and second transformed images is elongated excessively. The projective distortion correcting portion 6 corrects the elongated column V so that the elongated column V is shown so as to be compressed. Further, the superimposing portion 7 executes a process for displaying the superimposed image of the specifying images, which are generated by means of the three-dimensional object area specifying means 5, on the first transformed image, which is generated by means of the first projective transformation means T1, on the basis of the information of the locations.

Accordingly, the transformed image, into which the captured image captured by the camera 12 is projection-transformed so as to be viewed downwardly from an above viewpoint, is displayed on the monitor 20. Further, the frame and the like for specifying the three-dimensional object are superimposed on the transformed image at the area corresponding to the three-dimensional object (the three-dimensional object area) and thereby displaying the transformed image, on which the frame and the like are superimposed, on the monitor 20. Accordingly, the user may recognize the three-dimensional object on the monitor 20.

According to the embodiment, one frame of the captured images, captured by the camera 12, is projection-transformed into the first and second transformed images, which are generated on the first and second imaginary planes S 1 and S2, respectively. When the captured image, including the three-dimensional object image, is projection-transformed into the first and second transformed images and the first and second transformed images are generated on different levels (positions) of the imaginary planes S, respectively, the lower ends of the three-dimensional object images, included in the first and second transformed images, are set at different positions. Further, the three-dimensional object images in the first and second transformed images extend along the radially outward direction from the optical center C.

Subsequently, the differential process is executed on the first and second transformed images, generated on the first and second imaginary planes S1 and S2, in order to extract the outlines of the three-dimensional object images. Further, the binarization process is executed on the first and second transformed images in order to remove noise so as to clarify the area where the three-dimensional objects exist. The first and second transformed images after the bianarization process are superimposed, and then the logical conjunction process is executed on the superimposed first and second transformed images, thereby extracting the three-dimensional object candidate areas. The areas extending along the radially outward direction from the optical center C are selected from the three-dimensional object candidate areas so as to exclude, for example, a geometric mark on a road surface, and thereby the three-dimensional object areas are specified. Accordingly, a location of the three-dimensional object and a distance between the three-dimensional object and the vehicle 30 may be specified.

Accordingly, the areas where the three-dimensional objects exist (the three-dimensional object areas) are specified on the basis of one frame of the captured images, captured by the camera 12. Therefore, a plurality of cameras may not be required, and cost of hardware may be reduced. Further, according to a known object detecting apparatus, images are captured at different timings by a camera, and a location of a three-dimensional object is determined on the basis of the parallax between the images captured at different timings. Therefore, a time lag exists between each capture of the images. However, according to the embodiment, a time lag may not be generated, and therefore, time required for processing may be reduced. Accordingly, the location of the three-dimensional objects may be specified by means of a simple hardware within a short time.

### [Other embodiment]

The object detecting apparatus according to the above-described embodiment may be modified as follows.

The projective transformation means T may generate transformed images on three or more imaginary planes S, respectively. In a case where the transformed images are generated on three or more imaginary planes S, respectively, the three-dimensional object area extracting means 4 executes the image area extracting process and the three-dimensional object candidate area extracting process to all of the transformed images. Then, the three-dimensional object area extracting means 4 may execute the logical conjugation process to the superimposed image of the transformed images. When the logical conjugation process is executed to the superimposed image of the three or more transformed images, accuracy may be further improved.

The projective transformation means T may not necessarily generate the transformed image on the first imaginary plane S1, set at the same level as the road surface, and may generate transformed images respectively on two of the second to fourth imaginary planes S2 to S4, set at the higher level than the load surface.

The captured image, captured by the camera 12, may be displayed on the monitor 20, and the information for specifying the three-dimensional objects, generated by the three-dimensional object area specifying means 5, may also be displayed on the monitor 20 so that the specifying information is superimposed on the captured image.

The three-dimensional object 40 may be considered to be an obstruction, existing on a road surface. Accordingly, a distance between the vehicle 30 and the three-dimensional object 40 may be obtained through an image processing, and when the obtained distance is smaller than a predetermined value, a warning process may be executed. For example, a buzzer may be rung, or a synthesized announce maybe outputted in order to warn that the vehicle 30 is approaching the obstruction.

The obstruction detecting apparatus according to the embodiments may be applied to an image displaying system, in which a top view of the vicinity of a vehicle is displayed on the basis of one frame of the captured images, captured by means of a plurality of cameras.

## Claims

1. An obstruction detecting apparatus comprising:
a camera (12) capturing a surrounding of a vehicle (30);
a projective transformation means (T) projection-transforming one frame of captured images, captured by means of the camera (12), respectively on at least two imaginary planes (S), so as to generate transformed images, viewed downwardly from an above viewpoint, the imaginary planes (S) having a first imaginary plane (S1-S4) being set at a first level in parallel to a road surface and at least one second imaginary plane (S1-S4) being set at a second level in parallel to the road surface, the second level being different from the first level, and
a three-dimensional object area extracting means (4) extracting image areas from the transformed images, which are generated by means of the projective transformation means (T), and extracting an area, at which the image areas overlap when the transformed images are superimposed, and which extends along a radially outward direction from an optical center (C), as a three-dimensional object area, at which an image of a three-dimensional object exists.

2. The obstruction detecting apparatus according to claim 1, wherein the first level (S1) is the road surface.

3. The obstruction detecting apparatus according to claim 1 or 2 further comprising:
a three-dimensional object area specifying means (5) generating specifying information for specifying a location of the three-dimensional object area, extracted by the three-dimensional object area extracting means (4), and generating information of a location, at which the specifying information is displayed on the transformed image, which is generated by the projective transformation means (T) on the basis of the captured image, or on the captured image, captured by means of the camera (12).

4. The obstruction detecting apparatus according to any one of claims 1 to 3, wherein the three-dimensional object area extracting means (4) executes an image area extracting process for extracting the image areas from the transformed images using an outline extracting filter, a three-dimensional object candidate area extracting process for calculating a sum of the image areas when the transformed images are superimposed, thereby extracting an area, at which the image areas overlap, as a three-dimensional object candidate area, and a three-dimensional object image extracting process for extracting an area, which extends along the radially outward direction from the optical center (C), from the three-dimensional object candidate area as a three-dimensional object area.

5. The obstruction detecting apparatus according to any one of claims 1 to 4, wherein the projective transformation means (T) is configured by a first projective transformation means (T1) projection-transforming one frame of the captured images on a first imaginary plane (S1), being set at the same level as the road surface or being set to be in parallel with the road surface, and by a second projective transformation means (T2) projection-transforming one frame of the captured image on a second imaginary plane (S2, S3, S4), being set to be in parallel with the first imaginary plane (S1) at a higher level than the first imaginary plane (S1), and wherein the three-dimensional object area extracting means (4) extracting the image areas from the transformed images, generated by means of the first projective transformation means (T1) and the second projective transformation means (T2), and extracting an area, at which the image areas overlap when the transformed images are superimposed, and which extends along a radially outward direction from the optical center (C), as the three-dimensional object area.

## Patentansprüche

1. Hindernisdetektionsvorrichtung, enthaltend:
eine Kamera (12) zum Erfassen einer Umgebung eines Fahrzeugs (30);
ein Projektionstransformationsmittel (T), das einen Rahmen von erfassten Bildern, die mittels der Kamera (12) erfasst worden sind, jeweils auf mindestens zwei imaginären Ebenen (S) projektions-transformiert, um von einem oberen Betrachtungspunkt nach unten gesehen transformierte Bilder zu erzeugen, wobei die imaginären Ebenen (S) eine erste imaginäre Ebene (S1-S4), die auf ein erstes Niveau parallel zu einer Straßenfläche festgelegt ist, und mindestens eine zweite imaginäre Ebene (S1-S4), die auf ein zweites Niveau parallel zu der Straßenoberfläche festgelegt ist, haben, wobei die zweite Ebene von der ersten Ebene verschieden ist, und
ein 3D-Objektbereichs-Extraktionsmittel (4), das aus den transformierten Bildern, die mittels des Projektionstransformationsmittels (T) erzeugt worden sind, Bildbereiche extrahiert, und einen Bereich, in dem die Bildbereiche überlappen, wenn die transformierten Bilder überlagert werden, und der sich entlang einer radialen Richtung von einem optischen Zentrum (C) nach außen erstreckt, als einen 3D-Objektbereich extrahiert, wo ein Bild eines dreidimensionalen Objekts existiert.

2. Hindernisdetektionsvorrichtung nach Anspruch 1, bei der das erste Niveau (S1) die Straßenoberfläche ist.

3. Hindernisdetektionsvorrichtung nach Anspruch 1 oder 2, ferner mit:
einem 3D-Objektbereichs-Spezifizierungsmittel (5), das Spezifizierungsinformationen zum Spezifizieren eines Orts eines 3D-Objektbereichs, der durch das 3D-Objektbereichsextraktionsmittel (4) extrahiert worden ist, erzeugt, und Information eines Orts, wo die Spezifizierungsinformation auf dem transformierten Bild angezeigt wird, das durch das Projektionstransformationsmittel (C) erzeugt worden ist, basierend auf dem erfassten Bild oder auf dem erfassten Bild, das mittels der Kamera (12) erfasst worden ist, erzeugt.

4. Hindernisdetektionsvorrichtung nach einem der Ansprüche 1 bis 3, bei dem das 3D-Objektbereichs-Extraktionsmittel (4) einen Bildbereichsextraktionsprozess durchführt zum Extrahieren der Bildbereiche von den transformierten Bildern unter Verwendung eines Umrissextraktionsfilters, einen 3D-Objektkandidatenbereichs-Extraktionsprozesses zum Berechnen einer Summe der Bildbereiche, wenn die transformierten Bilder überlagert werden, wodurch ein Bereich, wo die Bildbereiche überlappen, als ein 3D-Objektkandidatenbereich extrahiert wird, und einen 3D-Objektbild-Extraktionsprozess, der einen Bereich, der sich entlang der radialen Richtung von dem optischen Zentrum (C) nach außen erstreckt, von dem 3D-Objektkandidatenbereich, als einen 3D-Objektbereich extrahiert.

5. Hindernisdetektionsvorrichtung nach einem der Ansprüche 1 bis 4, bei der das Projektionstransformationsmittel (T) konfiguriert ist durch ein erstes Projektionstransformationsmittel (T1), das eine Rahmen der erfassten Bilder auf eine erste imaginäre Ebene (S 1), die auf das gleiche Niveau festgelegt ist, wie die die Straßenoberfläche, oder parallel zu der Straßenoberfläche festgelegt ist, projektions-transformiert, und durch ein zweites Projektionstransformationsmittel (T2), das einen Rahmen des erfassten Bilds auf eine zweite imaginäre Ebene (S2, S3, S4), die parallel zu der ersten imaginären Ebene (S1) auf ein höheres Niveau als die erste imaginäre Ebene (S1) festgelegt ist, projektions-transformiert, und wobei das 3D-Objektbereiche-Extraktionsmittel (4) die Bildbereiche von den transformierten Bildern extrahiert, die mittels des ersten Projektionstransformationsmittels (T1) und des zweiten Projektionstransformationsmittels (T2) erzeugt worden sind, extrahiert, und einen Bereich, in dem Bildbereiche überlappen, wenn die transformierten Bilder überlagert sind, und der sich entlang der radialen Richtung von dem optischen Zentrum (C) nach außen erstreckt, als einen 3D-Objektbereich extrahiert.

## Revendications

1. Dispositif de détection d'obstructions comprenant :
une caméra (12) capturant l'environnement d'un véhicule (30) ;
un moyen de transformation par projection (T) transformant par projection une trame d'images capturées lesquelles sont capturées au moyen de la caméra (12), respectivement sur au moins deux plans imaginaires (S), de manière à générer des images transformées, vues vers le bas à partir d'un point de vue situé au-dessus, les plans imaginaires (S) présentant un premier plan imaginaire (S1 - S4) réglé à un premier niveau en parallèle à un revêtement de la route, et au moins un second plan imaginaire (S1 - S4) réglé à un second niveau en parallèle au revêtement de la route, le second niveau étant différent du premier niveau ; et
un moyen d'extraction de zones d'objet tridimensionnel (4) extrayant des zones d'image des images transformées, lesquelles sont générées par le moyen de transformation par projection (T), et extrayant une zone, au niveau de laquelle les zones d'image se chevauchent lorsque les images transformées sont superposées, et laquelle s'étend le long d'une direction radialement extérieure relativement à un centre optique (C), sous la forme d'une zone d'objet tridimensionnel, au niveau de laquelle une image d'un objet tridimensionnel existe.

2. Dispositif de détection d'obstructions selon la revendication 1, dans lequel le premier niveau (S1) est le revêtement de la route.

3. Dispositif de détection d'obstructions selon la revendication 1 ou 2, comprenant en outre :
un moyen de spécification de zone d'objet tridimensionnel (5) générant des informations de spécification destinées à spécifier un emplacement de la zone d'objet tridimensionnel extraite par le moyen d'extraction de zones d'objet tridimensionnel (4), et générant des informations connexes à un emplacement, au niveau duquel les informations de spécification sont affichées sur l'image transformée, laquelle est générée par le moyen de transformation par projection (T) sur la base de l'image capturée, ou sur l'image capturée qui est capturée au moyen de la caméra (12).

4. Dispositif de détection d'obstructions selon l'une quelconque des revendications 1 à 3, dans lequel le moyen d'extraction de zones d'objet tridimensionnel (4) exécute un processus d'extraction de zones d'image destiné à extraire les zones d'image des images transformées, en utilisant un filtre d'extraction de contours, un processus d'extraction de zones candidates d'objet tridimensionnel destiné à calculer une somme des zones d'image lorsque les images transformées sont superposées, extrayant ainsi une zone, au niveau de laquelle les zones d'image se chevauchent, sous la forme d'une zone candidate d'objet tridimensionnel, et un processus d'extraction d'images d'objet tridimensionnel destiné à extraire une zone, qui s'étend le long de la direction radialement extérieure relativement au centre optique (C), à partir de la zone candidate d'objet tridimensionnel, sous la forme d'une zone d'objet tridimensionnel.

5. Dispositif de détection d'obstructions selon l'une quelconque des revendications 1 à 4, dans lequel le moyen de transformation par projection (T) est configuré par un premier moyen de transformation par projection (T1) transformant par projection une trame des images capturées sur un premier plan imaginaire (S1), qui est réglé au même niveau que le revêtement de la route ou qui est réglé de manière à être parallèle au revêtement de la route, et par un second moyen de transformation par projection (T2) transformant par projection une trame de l'image capturée sur un second plan imaginaire (S2, S3, S4), qui est réglé de manière à être parallèle au premier plan imaginaire (S1) à un niveau plus élevé que le premier plan imaginaire (S1), et dans lequel le moyen d'extraction de zones d'objet tridimensionnel (4) extrait les zones d'image des images transformées, générées par le premier moyen de transformation par projection (T1) et le second moyen de transformation par projection (T2), et extrait une zone, au niveau de laquelle les zones d'image se chevauchent lorsque les images transformées sont superposées, et qui s'étend le long d'une direction radialement extérieure relativement au centre optique (C), sous la forme de la zone d'objet tridimensionnel.
